# FASCICULE DE BREVET EUROPEEN

(11) **EP 3 097 343 B1**
(45) Date de publication et mention de la délivrance du brevet: **06.02.2019**
(21) Numéro de dépôt: 14828260.1
(22) Date de dépôt: 19.12.2014
(51) Int. Cl.: F17C 13/02

(54) **BOUTEILLE DE FLUIDE SOUS PRESSION COMPRENANT UN DISPOSITIF ÉLECTRONIQUE D'INDICATION DE DONNÉES**
DRUCKFLÜSSIGKEITSZYLINDER MIT EINER ELEKTRONISCHEN DATENANZEIGEVORRICHTUNG
PRESSURIZED FLUID CYLINDER COMPRISING AN ELECTRONIC DATA-DISPLAY DEVICE

(30) Priorité: 22.01.2014 FR 1450525
(43) Date de publication de la demande: 30.11.2016
(73) Titulaire: L'Air Liquide Société Anonyme pour l'Etude et l'Exploitation des Procédés Georges Claude, 75007 Paris (FR)
(72) Inventeur: CARRON, Amélie, 94340 Joinville le Pont (FR); LOPEZ, Beatriz, F-75016 Paris (FR); REZEL, Christophe Roland, F-91600 Savigny sur Orge (FR); RUDNIANYN, Philippe, F-91700 Villiers Sur Orge (FR); VIVIER, Catherine, F-38120 Saint-Egreve (FR)
(74) Mandataire: De Cuenca, Emmanuel Jaime
(86) Numéro de dépôt international: PCT/FR2014/053460
(87) Numéro de publication internationale: WO 2015/110724

(56) Documents cités:
- EP-A2- 2 339 222
- WO-A2-2005/093377
- WO-A2-2012/164240
- GB-A- 2 486 018
- US-A- 6 012 411
- US-A1- 2004 045 608
- US-A1- 2005 103 342
- US-A1- 2008 150 739
- US-A1- 2010 245 098

## Description

La présente invention concerne une bouteille de fluide sous pression.

L'invention concerne plus particulièrement une bouteille de fluide sous pression munie d'un robinet abritant un premier circuit de soutirage comprenant une première extrémité amont communiquant avec le volume de stockage d'une bouteille de fluide sous pression et une seconde extrémité aval destinée à être raccordée à un organe utilisateur du gaz soutiré, le premier circuit de soutirage comprenant un organe de régulation du débit et/ou de la pression du fluide soutiré entre les extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps, le robinet comprenant un dispositif électronique d'indication de donnée(s) relative(s) au contenu de fluide dans une bouteille raccordée au robinet, le dispositif électronique d'indication comprenant un organe d'acquisition de stockage et de traitement de données et au moins un afficheur de données relié à l'organe d'acquisition de stockage et de traitement de données, le robinet comportant un capteur de position de l'organe de commande manuelle de l'organe de régulation, le capteur de position étant relié à l'organe d'acquisition de stockage et de traitement de données pour transmettre à ce dernier un signal représentatif du débit et/ou la pression de fluide imposé par l'organe de régulation.

L'invention concerne un robinet pourvu d'un dispositif électronique d'indication de données physiques relatives au contenu d'une bouteille de fluide sous pression notamment du gaz sous pression. L'invention concerne notamment un dispositif dit de manomètre électronique et digital. On pourra se référer par exemple au document FR2868160A1 qui décrit un exemple de tel dispositif.

Un tel dispositif comprend un capteur de pression et une logique électronique qui calcule et affiche des données de quantité de fluide et/ou d'autonomie. Cf. également le document WO2012164240A2.

Le document FR2915798A1 décrit un tel dispositif qui affiche une information sur l'état d'utilisation du robinet en détectant le mode d'utilisation (remplissage, soutirage, ...) via la l'information de la pression mesurée.

Dans le domaine notamment des gaz médicaux, le caractère plein d'une bouteille et la garantie de sa non-utilisation après un remplissage peut être une donnée importante pour un utilisateur.

Ceci peut être réalisé via un sceau de garantie mécanique ou digital.

Un sceau de garantie digital peut par exemple afficher une information temporaire du caractère plein tant que la pression mesurée dans la bouteille ne descend pas en dessous d'un seuil déterminé. Un tel système pose des problèmes notamment lorsque la pression de la bouteille varie en raison de la température bien qu'elle n'ait pas été utilisée. Pour résoudre ce problème, une solution consiste à prévoir des seuils de pressions suffisants pour échapper à ce phénomène. Cependant, ceci risque de diminuer la précision de détection d'un véritable soutirage de quantité relativement faible.

De plus, lorsque un afficheur affiche uniquement l'information du caractère plein avant l'utilisation de la bouteille, (et pas de valeur de quantité ou de pression), l'utilisateur ne peut connaître la contenance tant que la bouteille n'est pas soutirée et l'affichage modifié.

Un autre problème d'une information de pression réelle affichée avant la première utilisation peut être la variation de pression affichée du fait de la variation de la température ou des imprécisions de remplissage. L'utilisateur peut ainsi être confronté à des bouteilles identiques remplies affichant des niveaux de pression ou de quantité différents.

Un but de la présente invention est de pallier tout ou partie des inconvénients de l'art antérieur relevés ci-dessus.

A cette fin, la bouteille selon l'invention par ailleurs conforme à la définition générique qu'en donne le préambule ci-dessus, est définie par la revendication 1.

Le document US2004/044508A1 décrit une bouteille conforme au préambule de la revendication 1.

En particulier, l'organe d'acquisition de stockage et de traitement de données est configuré pour commander l'affichage sur l'afficheur après un remplissage de la bouteille et avant un premier soutirage de fluide d'une information fixe relative à un contenu fixe déterminé de fluide dans la bouteille, tant que le capteur de position n'a pas transmis un signal représentatif d'un débit et/ou la pression de fluide soutiré non nul pendant une durée déterminée et/ou n'a pas transmis un signal représentatif d'une quantité de fluide soutiré déterminée.

L'organe de commande manuelle de l'organe de régulation est déplaçable dans une position dite « de fermeture » correspondant une fermeture du premier circuit de soutirage, c'est-à-dire que le débit de fluide admis à passer de l'extrémité amont vers l'extrémité aval est nul. De plus, le robinet comprend un second circuit de soutirage qui évite l'organe de régulation du débit et/ou la pression du premier circuit de soutirage, lorsque l'organe de commande manuelle est dans sa position de fermeture et que la variation du signal représentatif de la pression de fluide au sein d'une bouteille est supérieure à un seuil de variation déterminé, l'organe d'acquisition de stockage et de traitement de données étant configuré pour détecter un soutirage de fluide via le second circuit de soutirage ou une fuite de fluide et le cas échéant commander l'affichage sur l'afficheur d'une information relative à un soutirage via le second circuit de soutirage et ou relative à une fuite,

Par ailleurs, des modes de réalisation de l'invention peuvent comporter l'une ou plusieurs des caractéristiques suivantes :
- l'organe d'acquisition de stockage et de traitement de données est configuré pour détecter un remplissage de la bouteille via la réception d'un signal extérieur de remplissage et/ou via la réception d'un signal d'augmentation de la pression mesurée dans la bouteille au-delà d'un seuil de remplissage déterminé,
- l'information relative à un contenu fixe déterminé de fluide dans la bouteille comprend au moins l'un parmi : un symbole alphanumérique, un symbole pictural, une valeur de pression fixe, une valeur de quantité de fluide fixe, le terme « plein » ou « full », le symbole « 100% »,
- l'organe d'acquisition de stockage et de traitement de données est configuré pour commander le retrait ou la modification de l'affichage sur l'afficheur de l'information relative à un contenu fixe déterminé de fluide dans la bouteille en réponse à la réception d'un signal du capteur de position de l'organe de commande représentatif de la sélection d'un débit et/ou la pression de fluide soutiré non nul pendant une durée comprise entre 0,1 seconde et 30 secondes et de préférence comprise entre 0,5 seconde et 5 secondes,
- l'organe d'acquisition de stockage et de traitement de données est configuré pour calculer la quantité de fluide soutiré à la réception d'un signal du capteur de position de l'organe de commande représentatif de la sélection d'un débit et/ou la pression de fluide soutiré non nul et pour commander le retrait ou la modification de l'affichage sur l'afficheur de l'information relative à un contenu fixe déterminé de fluide dans la bouteille lorsque cette quantité restante ou la pression restante calculée est égale à une valeur comprise entre 75% et 99% et de préférence comprise entre 98% et à 90 % de la quantité (respectivement de la pression) de la bouteille contenue dans la bouteille après remplissage,
- l'organe d'acquisition de stockage et de traitement de données est configuré pour calculer la quantité de fluide soutiré à la réception d'un signal du capteur de position de l'organe de commande représentatif de la sélection d'un débit et/ou la pression de fluide soutiré non nul et pour commander le retrait ou la modification de l'affichage sur l'afficheur de l'information relative à un contenu fixe déterminé de fluide dans la bouteille lorsque cette quantité soutiré excède un volume compris entre cinq et cent litres de fluide et de préférence compris entre dix et cinquante litres de fluide,
- la bouteille comporte un capteur de pression de mesure de la pression de la bouteille, le capteur de pression étant relié à l'organe d'acquisition de stockage et de traitement de données pour transmettre à ce dernier un signal représentatif de la pression de fluide mesurée, l'organe d'acquisition de stockage et de traitement de données étant configuré pour calculer la variation de pression ou de quantité de fluide dans la bouteille à partir de ce signal de pression mesuré et, en réponse, pour supprimer ou modifier l'affichage sur l'afficheur de l'information relative à un contenu fixe déterminé de fluide dans la bouteille lorsque la quantité de fluide soutiré calculée excède un seuil de soutirage initial déterminé,
- le seuil de soutirage initial est compris entre 0,5% et 10% de la quantité de gaz initiale,
- l'organe d'acquisition de stockage et de traitement de données est configuré pour recevoir à la fois le signal de pression mesurée du capteur de pression et le signal de débit et/ou de pression fourni par le capteur de position et pour calculer une information d'autonomie, de pression ou de quantité de fluide restant à partir de ces deux signaux,
- l'autonomie de fluide restant étant déterminée en calculant, à partir de la pression initiale mesurée, la diminution temporelle théorique de pression ou de la quantité de gaz générée par le débit et/ou la pression de soutirage imposé par l'organe de régulation et/ou mesurée par le capteur de pression,
- la valeur d'autonomie ou de contenu théorique de fluide restant dans la bouteille est exprimée en temps restant (respectivement en quantité restante) en divisant la pression initiale mesurée par le capteur de pression (ou respectivement, une quantité du gaz courante), par la variation de pression théorique imposée par l'organe de régulation (respectivement la variation de quantité imposée par l'organe de régulation), selon une formule du type : Temps restant=Pression initiale/variation de pression imposée (ou respectivement : Temps restant=quantité restante/variation de quantité imposée), la quantité étant estimée via l'équation des gaz parfait (PV=nRT) ou réels (PV=nZRT) (unités S.I.), avec P la pression mesurée, V le volume connu de la bouteille, n la quantité , R la constante des gaz parfaits et T la température mesurée ou approximée à la température ambiante mesurée, Z le facteur de compressibilité connu par tableau ou calculé,
- au moins l'un des composants et notamment l'un des capteurs (de position, de pression) est du type électrique et alimenté par une pile et/ou un système inductif, ledit au moins un composant pouvant être alimenté de façon non continue pour économiser de l'énergie, l'organe d'acquisition de stockage et de traitement de données peut être configuré pour assurer cette alimentation électrique au moment d'une mesure,
- lorsque la pression au sein de la bouteille mesurée par le capteur de pression est inférieure à un seuil bas l'organe d'acquisition de stockage et de traitement de données est configuré pour commander l'affichage sur l'afficheur d'une information fixe relative à un contenu fixe déterminé de fluide dans la bouteille (2), notamment « vide » « empty », « 0% », « appeler... », « bouteille à échanger/remplir », « capacité en litre, volume ou pression maximale de service de la bouteille », « date de maintenance ».

L'invention peut concerner également tout dispositif ou procédé alternatif comprenant toute combinaison des caractéristiques ci-dessus ou ci-dessous dans le cadre de la portée des revendications.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple de possible de réalisation de l'invention,
- la figure 2 illustre de façon schématique et partielle, la structure et le fonctionnement d'une partie du robinet de la figure 1,
- les figures 3 à 5 illustrent de façon schématique et partielle, la structure et le fonctionnement de respectivement trois exemples de capteurs de position d'un robinet selon l'invention,
- la figure -6 représente schématiquement deux courbes illustrant des exemples de signaux générés par un ou des capteurs de position de la figure 5,
- les figures -7 et -8 illustrent de façon schématique et partielle, la structure et le fonctionnement de respectivement, un quatrième exemple et un cinquième exemple de capteur de position du robinet selon l'invention,
- la figure -9 représente schématiquement un exemple de courbe de pression mesurée en fonction du temps.

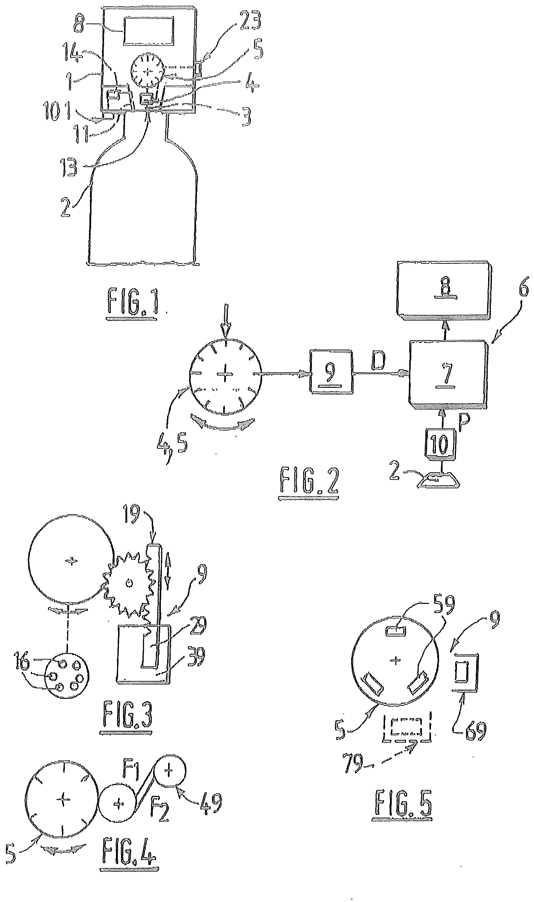

La figure 1 représente schématiquement une bouteille 2 de gaz sous pression munie d'un robinet 1 susceptible de mettre en oeuvre l'invention.

La bouteille 2 de fluide sous pression est munie d'un robinet 1 comprenant un corps muni d'une extrémité montée dans l'orifice de la bouteille 2 (par exemple par vissage).

Classiquement, le corps du robinet 1 abrite un premier circuit 3 de soutirage comprenant une première extrémité 13 amont communiquant avec le volume de stockage de la bouteille 2. Le circuit 3 de soutirage comprend une seconde extrémité 23 aval destinée à être raccordée à un organe utilisateur du gaz soutiré (par exemple un patient dans le cas d'oxygène ou d'un autre gaz médical).

Le premier circuit 3 de soutirage comprend un organe 4 de régulation du débit et/ou de la pression du fluide soutiré entre les extrémités amont 13 et aval 23. Cet organe 4 de régulation est par exemple un régulateur de débit à orifices calibrés 16 permettant de sélectionner un débit de gaz soutiré (cf. la représentation schématiquement de la figure 3). Bien entendu tout autre organe de régulation peut être envisage, par exemple une vanne à ouverture proportionnelle.

Le robinet 1 comprend un organe 5 de commande manuelle de l'organe 4. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet. L'organe 5 de commande comprend par exemple un volant rotatif. Bien entendu, tout autre système approprié peut être envisagé (levier pivotant, commande digitale, commande sans fil via une télécommande...). Par exemple, l'organe 5 de commandes sélectionne un orifice calibré et/ou commande une vanne de restriction de débit en fonction de sa position parmi une pluralité de positions discrètes stables ou une pluralité de positions d'un déplacement continu. En particuliers les positions stables peuvent être référencées mécaniquement par un point dur (par exemple via un système d'encliquetage).

Le robinet 1 comprend un dispositif 6 électronique d'indication de donnée(s) relative(s) au contenu de fluide dans une bouteille 2 raccordée au robinet 1. Le dispositif peut être du type comprenant un organe 7 d'acquisition de stockage et de traitement de données et au moins un afficheur 8 de données relié à l'organe 7 d'acquisition de stockage et de traitement de données. L'organe 7 d'acquisition de stockage et de traitement de données comprend par exemple un calculateur et/ou un microprocesseur ou tout autre système équivalent.

Bien entendu, ce dispositif peut comporter un ou plusieurs organes de réception de données (par connexion filaire et/ou sans fil) ainsi que un ou plusieurs organes d'émission de données (par connexion filaire et/ou sans fil).

Le robinet 1 comporte un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif du débit et/ou la pression de fluide imposé par l'organe 4 de régulation. Par exemple, le capteur 9 de position de l'organe 5 de commande comprend un convertisseur du déplacement mécanique de l'organe de commande en un signal électrique exploitable par l'organe 7 d'acquisition de stockage et de traitement de données.

Le détecteur est par exemple solidaire d'une partie fixe du robinet, ou respectivement de l'organe de commande, le détecteur fournissant un signal électrique ou numérique déterminé en fonction de la position de l'organe 5 de commande. Ce signal peut être fourni par voie filaire et/ou sans fil.

Le capteur 9 de position de l'organe 5 de commande peut comprendre par exemple au moins l'un parmi : un capteur capacitif, un capteur magnétique, un capteur mécanique, un capteur optique.

L'organe 5 de commande manuelle et/ou l'organe 4 de régulation peut être mobile selon une pluralité de positions discrètes (mécaniquement stables ou non) correspondant respectivement à des valeurs de débit et/ou la pression de fluide admis à passer de l'extrémité 13 amont vers l'extrémité aval (avec une graduation par exemple).

Comme illustré à la figure 2, le robinet peut comporter éventuellement également un capteur 10 de pression destiné à mesurer la pression au sein du volume de stockage de la bouteille 2. Le capteur 10 de pression est alors relié à l'organe 7 d'acquisition de stockage et de traitement de données pour transmettre à ce dernier (par voie filaire et/ou sans fil) un signal représentatif de la pression de fluide mesurée, notamment en temps réel ou périodiquement. Le capteur 10 de pression peut être situé par exemple au niveau de l'extrémité amont du premier circuit 3 de soutirage et/ou au niveau d'un second 11 circuit de soutirage.

L'organe 7 d'acquisition de stockage et de traitement de données est configuré pour calculer et afficher sur l'afficheur 8 une information d'autonomie et/ou de contenu restant et/ou de débit soutiré.

Selon une particularité avantageuse, après un remplissage de la bouteille 2 et avant un premier soutirage de fluide d'une information, l'organe 7 d'acquisition de stockage et de traitement de données est configuré pour commander l'affichage sur l'afficheur 8 d'une information relative à un contenu fixe déterminé de fluide dans la bouteille 2. Cette information fixe concerne le caractère plein et non utilisé de la bouteille après remplissage (sceau de garantie digital). Cette information du caractère plein est maintenue tant que le capteur 9 de position n'a pas transmis un signal représentatif d'un débit et/ou la pression de fluide soutiré non nul pendant une durée déterminée et/ou n'a pas transmis à l'organe 7 d'acquisition de stockage et de traitement de données un signal représentatif d'une quantité de fluide soutiré déterminée.

Par exemple, l'organe 7 d'acquisition de stockage et de traitement de données peut être configuré pour commander le retrait ou la modification de l'affichage sur l'afficheur 8 de l'information relative à un contenu fixe déterminé de fluide dans la bouteille 2 en réponse à la réception d'un signal du capteur 9 de position de l'organe 5 de commande représentatif de la sélection d'un débit et/ou la pression de fluide soutiré non nul pendant une durée déterminée. Cette durée déterminée est par exemple comprise entre 0,1 et 30 secondes et de préférence comprise entre 0,5 seconde et 5 secondes.

Comme illustré à la figure 2, le robinet (ou la bouteille elle-même) peut comporter un capteur 10 de pression mesurant la pression dans la bouteille 2.

Ainsi, de la même façon, dans le cas où le robinet 1 ou la bouteille 2 comporte un capteur 10 de pression de mesure de la pression dans la bouteille 2 relié à l'organe 7 d'acquisition de stockage et de traitement de données, ce dernier peut être configuré également pour calculer la variation de pression ou de quantité de fluide dans la bouteille 2 à partir de ce signal de pression P mesuré et, en réponse, peut être configuré pour déclencher la suppression ou la modification de l'affichage sur l'afficheur 8 de l'information fixe relative au caractère plein lorsque la quantité de fluide soutiré calculée excède un seuil de soutirage initial déterminé.

Le seuil de soutirage initial est compris par exemple entre 0,5% et 10% de la quantité de gaz initiale, par exemple 1 à 5% de la quantité initiale. Ceci permet de d'ignorer des fluctuations dues à la variation de température.

L'information relative au caractère plein (contenu fixe déterminé de fluide dans la bouteille) peut comprendre par exemple au moins l'un parmi : un symbole alphanumérique, un symbole pictural, une valeur de pression fixe, une valeur de quantité de fluide fixe (en volume ou en masse), le terme « plein » ou « full », « 100 » ou tout autre symbole équivalent.

Après remplissage l'organe 7 d'acquisition de stockage et de traitement de données peut être configuré pour afficher une valeur de pression ou de quantité ou d'autonomie. Après remplissage l'organe 7 d'acquisition de stockage et de traitement de données connait ainsi le caractère plein de la bouteille ainsi que la quantité de fluide stockée. De préférence cette valeur est fixe et par exemple arrondie à quelques pourcents à une valeur de référence (par exemple 500 litres au lieu de 489 litres ou 503 réels) quelle que soit le niveau réel après remplissage. Ceci permet d'afficher une information claire et homogène notamment lorsque plusieurs bouteilles identiques sont utilisées. Cette valeur affichée est de préférence fixe, même en cas de fluctuation due à la variation de température.

De préférence, l'organe 7 d'acquisition de stockage et de traitement de données est configuré pour détecter un remplissage de la bouteille 2 via la réception d'un signal extérieur de remplissage et/ou via la réception d'un signal d'augmentation de la pression P mesurée dans la bouteille au-delà d'un seuil de remplissage déterminé. L'information d'un nouveau remplissage déclenche automatiquement l'affichage de l'information sur le caractère plein de la bouteille 2. Par exemple, l'information d'un remplissage est envoyée par une station de remplissage, un opérateur à un port de réception d'information de l'organe 7 d'acquisition de stockage et de traitement de données. Ce remplissage peut également être détecté automatiquement par l'organe 7 d'acquisition de stockage et de traitement de données en mesurant la courbe de pression P via le capteur 10 (valeur de pression et allure de la courbe).

Pour détecter un premier soutirage, par exemple, l'organe 7 d'acquisition de stockage et de traitement de données est configuré pour calculer la quantité de fluide soutiré à la réception d'un signal du capteur 9 de position de l'organe 5 de commande représentatif de la sélection d'un débit et/ou la pression de fluide soutiré non nul et pour commander le retrait ou la modification de l'affichage sur l'afficheur (8) de l'information relative à un contenu fixe déterminé de fluide dans la bouteille (2) lorsque cette quantité restante ou la pression restante calculée est comprise entre 75% et 99% et de préférence comprise entre 98% et à 90 % de la quantité (respectivement de la pression) de la bouteille contenue dans la bouteille 2 après remplissage. Ce niveau de pression peut le cas échéant être corrigé en température c'est-à-dire être calculé à une température de référence par exemple 23°C ou 15°C. A cet effet, le dispositif peut comporter un capteur de température interne et/ou externe à la bouteille.

C'est-à-dire que, lorsqu'après un remplissage le capteur 9 de position indique qu'un soutirage suffisant en quantité a été réalisé, l'organe 7 d'acquisition de stockage et de traitement de données peut supprimer ou modifier ce sceau de garantie.

Par exemple, l'organe 7 d'acquisition de stockage et de traitement de données peut être configuré pour commander le retrait ou la modification de l'affichage sur l'afficheur 8 de l'information relative à un contenu fixe déterminé de fluide dans la bouteille (2) lorsque cette quantité soutiré excède un volume compris entre cinq et trente litres de fluide et de préférence compris entre quinze et vingt-cinq litres de fluide.

L'organe 7 d'acquisition de stockage et de traitement de données peut être configuré pour recevoir à la fois le signal de pression P mesurée par un capteur 10 de pression et le signal de débit et/ou de pression D fourni par le capteur 9 de position et pour calculer une information d'autonomie, de pression ou de quantité de fluide restant à partir de ces deux signaux.

De plus, l'autonomie de fluide restant peut être déterminée également en calculant, à partir de la pression initiale mesurée, la diminution temporelle théorique de pression ou de la quantité de gaz générée par le débit et/ou la pression D de soutirage imposé par l'organe 4 de régulation et/ou mesurée par le capteur 10 de pression.

De plus, après ou au moment du premier soutirage, l'organe 7 d'acquisition de stockage et de traitement de données peut être configuré, en réponse à la réception de ce signal de débit et/ou de pression imposé, pour commander l'affichage sur l'afficheur 8 d'une information relative du débit et/ou la pression de fluide imposé par l'organe 4 de régulation.

L'organe 7 d'acquisition de stockage et de traitement de données peut ainsi être programmé pour calculer une information d'autonomie de fluide restant ou de débit soutiré à partir de ces deux informations.

L'autonomie théorique de fluide restant est déterminée par exemple en calculant, à partir de la pression initiale mesurée, la diminution temporelle théorique de pression ou de la quantité de gaz générée par le débit et/ou la pression D de soutirage imposé par l'organe 4 de régulation ou mesurée par le capteur 10 de pression.

L'information théorique d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe (4) de régulation), selon une formule par exemple du type : Temps restant=Pression initiale/variation de pression imposée (ou respectivement : Temps restant= Contenu de fluide restant/variation de quantité imposée).

De la même façon, l'information réelle d'autonomie peut être exprimée en temps restant (respectivement en quantité restante) en divisant la pression initiale mesurée par le capteur 10 de pression (ou respectivement, une quantité du gaz courante), par la variation de pression réelle mesurée par le capteur 10 de pression (respectivement la variation de quantité calculée à partir de la pression P mesurée), selon une formule par exemple du type : Temps restant=Pression initiale/variation de pression réelle (ou respectivement : Temps restant= Contenu de fluide restant/variation de quantité mesurée).

Les variations de quantité ou de pression théoriques peuvent être calculées par exemple via l'équation des gaz parfait PV=nRT ou réels PV= ZnRT (unités S.I.), avec P la pression mesurée, V le volume connu de la bouteille, n la quantité, R la constante des gaz parfaits et T la température mesurée ou approximée à la température ambiante mesurée, Z le facteur de compressibilité supposé connu (table ou calcul). De même les conversions entre pression et quantité peuvent être calculées via l'équation des gaz parfait ou toute autre formule équivalente, le volume de la bouteille 2 étant connu et renseigné dans le l'organe 7 d'acquisition de stockage et de traitement de données et la température peut être mesurée par un capteur extérieur ambiant ou calculée ou renseignée ou approximée

L'organe 7 d'acquisition de stockage et de traitement de données peut être configuré pour calculer une information d'autonomie ou de contenu de fluide sur un intervalle de temps déterminé compris entre quinze secondes et dix minutes et de préférence entre trente secondes et cinq minutes, à partir du signal de pression mesuré par le capteur 10 de pression. L'organe 7 d'acquisition de stockage et de traitement de données est configuré de préférence pour comparer périodiquement cette information d'autonomie calculée sur la base du signal de pression P mesuré par rapport à l'information d'autonomie théorique calculée à partir de la variation de quantité ou de pression imposée par l'organe 4 de régulation.

La mesure dynamique de pression peut permettre de réajuster si besoin plus précisément l'affichage du débit effectif soutiré et/ou l'autonomie affichée.

Le cas échant un signal d'alerte (visuel et/ou sonore et/ou sans fil) peut être émis en cas de divergence ou d'anomalie.

De même, l'organe 7 d'acquisition de stockage et de traitement de données peut être configuré pour recalculer et afficher automatiquement une mise à jour de l'information d'autonomie, de contenu ou de débit de fluide à la réception d'un signal du capteur 9 de position indiquant un changement débit et/ou la pression de fluide imposé par l'organe 4 de régulation via l'organe 5 de commande.

De préférence l'organe 5 de commande manuelle de l'organe 4 de régulation est déplaçable dans une position dite « de fermeture » correspondant une fermeture du premier circuit 3 de soutirage. C'est-à-dire que le débit de fluide admis à passer de l'extrémité 13 amont vers l'extrémité aval 23 est nul.

Comme illustré à la figure 1, le robinet 1 peut comprendre un second circuit 11 de soutirage, par exemple distinct du premier circuit 3 de soutirage et qui évite l'organe 4 de régulation du débit et/ou la pression du premier circuit de soutirage 3.

Ce second circuit 11 de soutirage peut le cas échéant posséder une portion commune avec le premier circuit 3 de soutirage.

Ce second circuit 11 de soutirage est par exemple prévu pour fournir un gaz à une pression régulée (via un détendeur 14 de pression). Par exemple, le second circuit 11 de soutirage fournit une pression f réglable ou fixe et de l'ordre de trois à dix bar à un appareil utilisateur. Par exemple le second circuit 11 de soutirage possède un raccord de sortie 101 (par exemple via une prise crantée) pouvant être relié à un ventilateur médical pour fournir de l'oxygène à ce dernier.

Ce second circuit 11 de soutirage peut alimenter à gaz de la bouteille 2 indépendamment du premier circuit 3 de soutirage. Ainsi, lorsque l'organe 5 de commande manuelle est dans sa position de fermeture et que la variation du signal représentatif de la pression de fluide au sein d'une bouteille 2 (mesuré par le capteur 10 de pression) est supérieure à un seuil de variation déterminé (par exemple 25mbar par minute, l'organe 7 d'acquisition de stockage et de traitement de données peut détecter un soutirage de fluide via le second circuit 11 de soutirage ou, si ce second circuit 11 de soutirage n'est pas utilisé, une éventuelle fuite de fluide.

De même, le soutirage de fluide via le second circuit peut être détecté et peut supprimer ou modifier l'affichage du sceau de garantie même si l'organe 5 de commande n'a pas été manipulé.

L'organe 7 d'acquisition de stockage et de traitement de données peut le cas échéant commander l'affichage sur l'afficheur 8 ou l'envoi (sans fil, par voie filaire ou par voie sonore) d'une information relative à un soutirage via le second circuit 11 de soutirage et ou relative à une fuite (signal d'alerte).

En particulier, lorsque l'organe 5 de commande manuelle est dans sa position dite de fermeture et que la variation du signal représentatif de la pression de fluide au sein d'une bouteille est supérieure à un seuil de variation déterminé (par exemple 25 mbar par minute), l'organe 7 d'acquisition de stockage et de traitement de données peut être configuré pour détecter au moins une caractéristique de l'allure de la variation de pression de fluide dans la bouteille du fait du soutirage via le second circuit de soutirage 11.

La au moins une caractéristique comprend par exemple: un caractère périodique de la variation de pression ou de quantité, la fréquence de la variation de pression ou de quantité, le niveau de variation de pression ou de quantité,...

Comme illustré schématiquement à la figure 10, ceci permet de détecter au bout de deux à trois oscillations de pression instantanément par exemple un soutirage périodique correspondant à une alimentation en gaz d'un ventilateur respiratoire. En effet, même si le gaz soutiré ne passe pas par le régulateur 4 de débit, le débit est régulé directement par un ventilateur et dépend de la respiration du patient. Ce débit ainsi délivré n'est pas constant mais oscille dans le temps (selon la respiration du patient).

Dans le cas où ce signal de pression ne correspond pas à un signal de ventilation (par exemple une variation décroissante continue), l'organe 7 d'acquisition de stockage et de traitement de données peut déterminer qu'il s'agit d'une fuite ou d'une utilisation incorrecte du gaz et peut le signaler de la même façon.

Selon une particularité avantageuse, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 7 d'acquisition de stockage et de traitement de données est configuré pour sélectionner et afficher sur l'afficheur 8 l'une ou les deux de ces valeurs adjacentes, un intervalle défini par ces valeurs ou une valeur intermédiaire entre ces deux valeurs adjacentes. Alternativement, dans ce cas de figure l'organe 7 d'acquisition de stockage et de traitement de données peut être configuré supprimer tout ou partie de l'affichage des grandeurs habituellement affichées (débit, pression, quantité, autonomie...).

Cette information peut le cas échéant être utilisée pour détecter un premier soutirage.

De même, l'une de ces deux valeurs adjacentes ou une valeur intermédiaire entre ces deux valeurs adjacentes peut être utilisée pour le calcul théorique d'une valeur de débit soutiré ou quantité restante tel que décrit ci-dessus.

De préférence, l'organe 7 d'acquisition de stockage et de traitement de données affiche et/ou signal (transmission à distance sans fil ou avec fil ou de façon sonore) la valeur la plus critique ou la plus défavorable pour l'utilisateur.

Ceci permet d'alerter ergonomiquement l'utilisateur d'une manipulation erronée en affichant une information pertinente mais pénalisante l'obligeant à corriger sa sélection.

Le dispositif peut être configuré pour dans ce cas délivrer un débit de fluide correspondant à l'une des deux valeurs adjacentes, notamment la valeur affichée.

De préférence, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 4 de régulation est conformé pour autoriser le soutirage d'un débit de fluide non nul compris entre lesdites deux valeurs adjacentes respectives de débit et/ou la pression, notamment la valeur affichée.

Comme illustré à la figure 3, le capteur 9 de position de l'organe 5 de commande peut comprendre par exemple comprend un mécanisme 19 engrenant avec l'organe 5 de commande (un système à engrenage et/ou crantage) et un potentiomètre 39. Le mécanisme comporte une pièce mobile 29 (par exemple une roue ou une tige ou une crémaillère) formant un curseur du potentiomètre 39. De cette façon, le capteur 9 de position fournit une valeur de tension et/ou de résistance déterminée en fonction de la position de l'organe 5 de commande.

Dans l'exemple de la figure 4, le capteur 9 de position de l'organe 5 de commande comprend un mécanisme engrenant avec l'organe 5 de commande comprenant un codeur optique et/ou numérique 49, par exemple un codeur à fils (fils conducteur et un fil de masse). Le codeur 49 fournit un signal numérique déterminé en fonction de la position de l'organe 5 de commande. Selon la position du mécanisme, un ou plusieurs fils sont sous tension ou court-circuités formant une pluralité de signaux distincts pour caractériser différentes positions (par exemple 2ⁿ⁻¹ pour un système à n fils).

Comme illustré à la figure 5, le capteur 9 de position de l'organe 5 de commande peut comprendre un système magnétique comportant au moins un aimant 59 solidaire de l'organe 5 de commande et au moins un détecteur 69, 79 de champ magnétique du au moins un aimant 59. En cas de déplacement (tel qu'une rotation) de l'organe 5 de commande, un détecteur 69 détecte par exemple un champ magnétique E en fonction du déplacement D qui oscille et permet de caractériser une pluralité de positions. Lorsque le dispositif comprend un second détecteur 79 (ou plus), plusieurs signaux distincts peuvent être exploité simultanément pour améliorer la détection des positions distinctes.

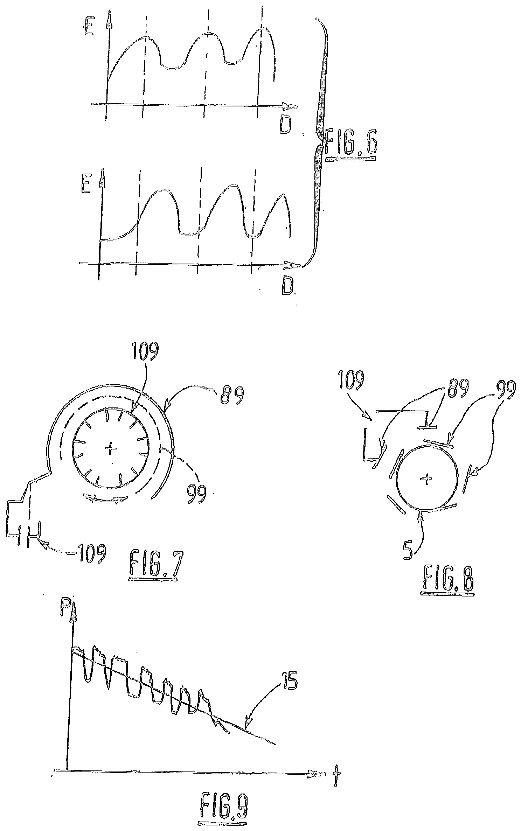

Comme illustré aux figures 8 et 9, le capteur 9 de position de l'organe 5 de commande peut comprendre un système capacitif mesurant 109 une capacité électrique entre une référence fixe 89 magnétique et une partie mobile 99 liée à l'organe 5 de commande

Tous ces systèmes présentent l'avantage d'une détection fiable sans nécessiter de prévoir de fils électriques associés à une partie mobile du mécanisme.

Le système à potentiomètre et plus généralement chaque système de détection peut être calibré facilement en fabrication.

Ainsi, lorsque l'organe 5 de commande manuelle est dans sa position de fermeture et que la variation du signal représentatif de la pression de fluide au sein d'une bouteille 2 est supérieure à un seuil de variation déterminé, l'organe 7 d'acquisition de stockage et de traitement de données peut être configuré pour calculer une information d'autonomie de fluide restant à partir de la seule mesure du signal de pression initiale et de la variation de ce signal de pression donné par le capteur 10 de pression. L'organe 7 d'acquisition de stockage et de traitement de données peut notamment être configuré pour commander l'affichage sur l'afficheur 8 de cette information d'autonomie calculée et/ou une information relative à la pression ou la quantité initiale de fluide dans la bouteille 2.

Bien que l'invention soit relativement simple et peu coûteuse on conçoit aisément qu'elle permet d'afficher plus rapidement des informations fiables sur l'état et le mode d'utilisation de la bouteille.

L'invention s'applique avantageusement aux bouteilles de gaz sous pression, notamment aux bouteilles contenant de l'oxygène sous pression.

## Revendications

1. Bouteille de fluide sous pression munie d'un robinet abritant un premier circuit (3) de soutirage comprenant une première extrémité (13) amont communiquant avec le volume de stockage d'une bouteille de fluide sous pression et une seconde extrémité (23) aval destinée à être raccordée à un organe utilisateur du gaz soutiré, le premier circuit (3) de soutirage comprenant un organe (4) de régulation du débit et/ou de la pression du fluide soutiré entre les extrémités amont (13) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (13) amont vers l'extrémité aval (23) selon la position de l'organe (5) de commande par rapport au corps (5), le robinet (1) comprenant un dispositif (6) électronique d'indication de donnée(s) relative(s) au contenu de fluide dans une bouteille raccordée au robinet (1), le dispositif (6) électronique d'indication comprenant un organe (7) d'acquisition de stockage et de traitement de données et au moins un afficheur (8) de données relié à l'organe (7) d'acquisition de stockage et de traitement de données, le robinet (1) comportant un capteur (9) de position de l'organe (5) de commande manuelle de l'organe (4) de régulation, le capteur (9) de position étant relié à l'organe (7) d'acquisition de stockage et de traitement de données pour transmettre à ce dernier un signal représentatif du débit et/ou la pression de fluide imposé par l'organe (4) de régulation, l'organe (7) d'acquisition de stockage et de traitement de données étant configuré pour commander l'affichage sur l'afficheur (8) après un remplissage de la bouteille (2) et avant un premier soutirage de fluide d'une information fixe relative à un contenu fixe déterminé de fluide dans la bouteille (2), tant que le capteur (9) de position n'a pas transmis un signal représentatif d'un débit et/ou la pression de fluide soutiré non nul pendant une durée déterminée et/ou n'a pas transmis un signal représentatif d'une quantité de fluide soutiré déterminée, l'organe (5) de commande manuelle de l'organe (4) de régulation étant déplaçable dans une position dite « de fermeture » correspondant à une fermeture du premier circuit (3) de soutirage, c'est-à-dire que le débit de fluide admis à passer de l'extrémité (13) amont vers l'extrémité aval (23) est nul, **caractérisé en ce que** le robinet comporte un capteur (10) de pression destiné à mesurer la pression au sein du volume de stockage de la bouteille (2), le capteur étant relié à l'organe (7) d'acquisition, de stockage et de traitement de données pour transmettre à ce dernier, par voie filaire et/ou sans fil, un signal représentatif de la pression de fluide mesurée, et **en ce que** le robinet (1) comprend un second circuit (11) de soutirage qui évite l'organe (4) de régulation du débit et/ou la pression du premier circuit de soutirage (3), et **en ce que**, lorsque l'organe (5) de commande manuelle est dans sa position de fermeture et que la variation du signal représentatif de la pression de fluide au sein d'une bouteille est supérieure à un seuil de variation déterminé, l'organe (7) d'acquisition de stockage et de traitement de données est configuré pour détecter un soutirage de fluide via le second circuit (11) de soutirage ou une fuite de fluide et le cas échéant commander l'affichage sur l'afficheur (8) d'une information relative à un soutirage via le second circuit (11) de soutirage et ou relative à une fuite.

2. Bouteille selon la revendication 1, **caractérisée en ce que** lorsque la variation du signal représentatif de la pression de fluide au sein de la bouteille est supérieure au seuil de variation déterminé, par exemple égal à 25 mbar par minute, l'organe (7) d'acquisition de stockage et de traitement de données est configuré pour détecter au moins une caractéristique de l'allure de la variation de pression de fluide dans la bouteille du fait du soutirage via le second circuit de soutirage (11), la au moins une caractéristique comprend par exemple: un caractère périodique de la variation de pression ou de quantité, la fréquence de la variation de pression ou de quantité, le niveau de variation de pression ou de quantité et **en ce que** dans le cas où ce signal de pression ne correspond pas à un signal de ventilation c'est-à-dire la variation de pression est décroissante et continue, l'organe (7) d'acquisition de stockage et de traitement de données est configuré pour déterminer qu'il s'agit d'une fuite ou d'une utilisation incorrecte du gaz et pour le signaler par la commande d'une information relative à un soutirage via le second circuit (11) de soutirage et/ou relative à une fuite via un signal d'alerte.

3. Bouteille selon l'une quelconque de revendications 1 ou 2, **caractérisée en ce que** ladite information relative à un contenu fixe déterminé de fluide dans la bouteille comprenant au moins l'un parmi : un symbole alphanumérique, un symbole pictural, une valeur de pression fixe, une valeur de quantité de fluide fixe, le terme « plein » ou « full », le symbole « 100% », et **en ce que** l'organe (7) d'acquisition de stockage et de traitement de données est configuré pour calculer la quantité de fluide soutiré à la réception d'un signal du capteur (9) de position de l'organe (5) de commande représentatif de la sélection d'un débit et/ou la pression de fluide soutiré non nul et pour commander le retrait ou la modification de l'affichage sur l'afficheur (8) de l'information relative à un contenu fixe déterminé de fluide dans la bouteille (2) lorsque cette quantité restante ou la pression restante calculée est égale à une valeur comprise entre 75% et 99% et de préférence comprise entre 90% et 98 % de la quantité (respectivement de la pression) de la bouteille contenue dans la bouteille (2) après remplissage et/ou pour commander le retrait ou la modification de l'affichage sur l'afficheur (8) de l'information relative à un contenu fixe déterminé de fluide dans la bouteille (2) en réponse à la réception d'un signal du capteur (9) de position de l'organe (5) de commande représentatif de la sélection d'un débit et/ou la pression de fluide soutiré non nul pendant une durée comprise entre 0,1 seconde et 30 secondes et de préférence comprise entre 0,5 seconde et 5 secondes.

4. Bouteille selon l'une quelconque des revendications 1 à 3, **caractérisée en ce que** l'organe (7) d'acquisition de stockage et de traitement de données est configuré pour détecter un remplissage de la bouteille (2) via la réception d'un signal extérieur de remplissage et/ou via la réception d'un signal d'augmentation de la pression (P) mesurée dans la bouteille au-delà d'un seuil de remplissage déterminé.

5. Bouteille selon l'une quelconque des revendications 1 à 4, **caractérisée en ce que** l'organe (7) d'acquisition de stockage et de traitement de données est configuré pour calculer la quantité de fluide soutiré à la réception d'un signal du capteur (9) de position de l'organe (5) de commande représentatif de la sélection d'un débit et/ou la pression de fluide soutiré non nul et pour commander le retrait ou la modification de l'affichage sur l'afficheur (8) de l'information relative à un contenu fixe déterminé de fluide dans la bouteille (2) lorsque cette quantité soutiré excède un volume compris entre cinq et cent litres de fluide et de préférence compris entre dix et cinquante litres de fluide.

6. Bouteille selon l'une quelconque des revendications 1 à 5, **caractérisée en ce que** l'organe (7) d'acquisition de stockage et de traitement de données est configuré pour calculer la variation de pression ou de quantité de fluide dans la bouteille (2) à partir de ce signal de pression P mesuré et, en réponse, pour supprimer ou modifier l'affichage sur l'afficheur (8) de l'information relative à un contenu fixe déterminé de fluide dans la bouteille (2) lorsque la quantité de fluide soutiré calculée excède un seuil de soutirage initial déterminé.

7. Bouteille selon la revendication 6, **caractérisée en ce que** le seuil de soutirage initial est compris entre 0,5% et 10% de la quantité de gaz initiale.

8. Bouteille selon l'une quelconque des revendications 1 à 7, **caractérisée en ce que** l'organe (7) d'acquisition de stockage et de traitement de données est configuré pour recevoir à la fois le signal de pression (P) mesurée du capteur (10) de pression et le signal de débit et/ou de pression (D) fourni par le capteur (9) de position et pour calculer une information d'autonomie, de pression ou de quantité de fluide restant à partir de ces deux signaux.

9. Bouteille selon la revendication 8, **caractérisée en ce que**, l'autonomie de fluide restant étant déterminée en calculant, à partir de la pression initiale mesurée, la diminution temporelle théorique de pression ou de la quantité de gaz générée par le débit et/ou la pression (D) de soutirage imposé par l'organe (4) de régulation et/ou mesurée par le capteur (10.) de pression.

10. Bouteille selon l'une quelconque des revendications 1 à 9, **caractérisée en ce que** la valeur d'autonomie ou de contenu théorique de fluide restant dans la bouteille est exprimée en temps restant (respectivement en quantité restante) en divisant la pression initiale mesurée par le capteur (10) de pression (ou respectivement, une quantité du gaz courante), par la variation de pression théorique imposée par l'organe (4) de régulation (respectivement la variation de quantité imposée par l'organe (4) de régulation), selon une formule du type : Temps restant=Pression initiale/variation de pression imposée (ou respectivement : Temps restant=quantité restante/variation de quantité imposée), la quantité étant estimée via l'équation des gaz parfait (PV=nRT) ou réels (PV=nZRT) (unités S.I.), avec P la pression mesurée, V le volume connu de la bouteille, n la quantité , R la constante des gaz parfaits et T la température mesurée ou approximée à la température ambiante mesurée, Z le facteur de compressibilité connu par tableau ou calculé.

## Patentansprüche

1. Druckfluidflasche, versehen mit einem Schließhahn, der einen ersten Entnahmekreis (3) aufnimmt, der ein erstes stromaufwärtiges Ende (13) umfasst, das mit dem Speichervolumen einer Druckfluidflasche in Verbindung steht, und ein zweites stromabwärtiges Ende (23), das dazu bestimmt ist, an ein Benutzerorgan des entnommenen Gases angeschlossen zu werden, wobei der erste Entnahmekreis (3) ein Organ (4) zum Regulieren des Durchsatzes und/oder des Drucks des zwischen dem stromaufwärtigen (13) und dem stromabwärtigen (23) Ende entnommenen Fluids umfasst, wobei der Schließhahn (1) ein Organ (5) zum manuellen Steuern des Organs (4) zum Regulieren umfasst, wobei das Steuerorgan (5) relativ zum Körper des Schließhahns (1) beweglich angebracht ist und mit dem Organ (4) zum Regulieren zusammenwirkt, um den Fluiddurchsatz und/oder -druck zu kontrollieren, das zur Zirkulation von dem stromaufwärtigen Ende (13) zum stromabwärtigen Ende (23) gemäß der Stellung des Steuerorgans (5) bezüglich des Körpers (5) zugelassen ist, wobei der Schließhahn (1) eine elektronische Vorrichtung (6) zum Anzeigen von Daten in Bezug auf den Fluidgehalt in einer an den Schließhahn (1) angeschlossenen Flasche umfasst, wobei die elektronische Vorrichtung (6) zum Anzeigen ein Datenspeicher- und Datenverarbeitungserfassungsorgan (7) und mindestens eine mit dem Datenspeicher- und Datenverarbeitungserfassungsorgan (7) verbundene Datenanzeigevorrichtung (8) umfasst, wobei der Schließhahn (1) einen Positionssensor (9) des Organs (5) zum manuellen Steuern des Organs (4) zum Regulieren aufweist, wobei der Positionssensor (9) mit dem Datenspeicher- und Datenverarbeitungserfassungsorgan (7) verbunden ist, um an dieses ein Signal zu übertragen, das für den von dem Organ (4) zum Regulieren auferlegten Fluiddurchsatz und/oder -druck repräsentativ ist, wobei das Datenspeicher- und Datenverarbeitungserfassungsorgan (7) konfiguriert ist, um nach einer Füllung der Flasche (2) und vor einer ersten Fluidentnahme das Anzeigen einer festen Information bezüglich eines vorbestimmten festen Fluidgehalts in der Flasche (2) auf der Anzeigevorrichtung (8) zu steuern, solange der Positionssensor (9) kein Signal übertragen hat, das für einen Durchsatz und/oder Druck eines entnommenen Fluids ungleich Null für eine bestimmte Zeit repräsentativ ist, und/oder kein Signal übertragen hat, das für eine bestimmte Menge an entnommenem Fluid repräsentativ ist, wobei das Organ (5) zum manuellen Steuern des Organs (4) zum Regulieren in eine sogenannte "Schließstellung" bewegbar ist, die einem Schließen des ersten Entnahmekreises (3) entspricht, das heißt, dass der Durchsatz des Fluids, das zum Durchlauf vom stromaufwärtigen Ende (13) zum stromabwärtigen Ende (23) zugelassen ist, gleich Null ist, **dadurch gekennzeichnet, dass** der Schließhahn einen Drucksensor (10) aufweist, der zum Messen des Drucks innerhalb des Speichervolumens der Flasche (2) bestimmt ist, wobei der Sensor mit dem Datenspeicher- und Datenverarbeitungserfassungsorgan (7) verbunden ist, um an letzteres drahtgebunden und/oder drahtlos ein für den gemessenen Fluiddruck repräsentatives Signal zu übertragen, und dadurch, dass der Schließhahn (1) einen zweiten Entnahmekreis (11) umfasst, der das Organ (4) zum Regulieren des Dursatzes und/oder des Drucks des ersten Entnahmekreises (3) meidet, und dadurch, dass, wenn sich das Organ (5) zum manuellen Steuern in seiner Schließstellung befindet und die Variation des Signals, das für den Fluiddruck innerhalb einer Flasche repräsentativ ist, größer ist als ein bestimmter Variationsschwellenwert, das Datenspeicher- und Datenverarbeitungserfassungsorgan (7) konfiguriert ist, um eine Fluidentnahme über den zweiten Entnahmekreis (11) oder eine Fluidleckage zu detektieren und, falls erforderlich, das Anzeigen einer Information in Bezug auf eine Entnahme über den zweiten Entnahmekreis (11) und/oder eine Leckage auf der Anzeigevorrichtung (8) zu steuern.

2. Flasche nach Anspruch 1, **dadurch gekennzeichnet, dass**, wenn die Variation des für den Fluiddruck in der Flasche repräsentativen Signals größer als der bestimmte Variationsschwellenwert ist, beispielsweise gleich 25 mbar pro Minute, das Datenspeicher- und Datenverarbeitungserfassungsorgan (7) konfiguriert ist, um mindestens eine Kenngröße des Verhaltens der Fluiddruckvariation in der Flasche aufgrund der Entnahme über den zweiten Entnahmekreis (11) zu detektieren, wobei die mindestens eine Kenngröße zum Beispiel umfasst: einen periodischen Charakter der Druck- oder Mengenvariation, die Frequenz der Druck- oder Mengenvariation, das Niveau der Druck- oder Mengenvariation, und dadurch, dass in dem Fall, in dem dieses Drucksignal einem Lüftungssignal nicht entspricht, das heißt die Druckänderung abnehmend und kontinuierlich ist, das Datenspeicher- und Datenverarbeitungserfassungsorgan (7) konfiguriert ist, um zu bestimmen, dass es sich um eine Leckage oder eine falsche Verwendung des Gases handelt, und um es durch Steuerung einer Information in Bezug auf eine Entnahme über den zweiten Entnahmekreis (11) und/oder in Bezug auf eine Leckage über ein Alarmsignal zu melden.

3. Flasche nach einem der Ansprüche 1 oder 2, **dadurch gekennzeichnet, dass** die Information in Bezug auf einen bestimmten festen Gehalt an Fluid in der Flasche mindestens eines der Folgenden umfasst: ein alphanumerisches Symbol, ein bildliches Symbol, einen festen Druckwert, einen festen Fluidmengenwert, den Begriff "voll" oder "full", das Symbol "100 %", und dadurch, dass das Datenspeicher- und Datenverarbeitungserfassungsorgan (7) konfiguriert ist, um die Menge des entnommenen Fluids beim Empfangen eines Signals vom Positionssensor (9) des Steuerorgans (5) zu berechnen, das für die Auswahl eines Durchsatzes und/oder des Drucks des entnommenen Fluids ungleich Null repräsentativ ist, und um die Entfernung oder Änderung der Informationsanzeige in Bezug auf einen vorbestimmten festen Fluidgehalt in der Flasche (2) auf der Anzeigevorrichtung (8) zu steuern, wenn diese Restmenge oder dieser berechnete Restdruck gleich einem Wert zwischen 75 % und 99 % und vorzugsweise zwischen 90% und 98 % der enthaltenen Menge der Flasche (beziehungsweise des Drucks) in der Flasche (2) nach dem Füllen umfasst ist, und/oder um die Entfernung oder Änderung der Informationsanzeige in Bezug auf einen vorbestimmten festen Fluidgehalt in der Flasche (2) auf der Anzeigevorrichtung (8) als Reaktion auf das Empfangen eines Signals vom Positionssensor (9) des Steuerorgans (5), das für die Auswahl eines Durchsatzes und/oder des Drucks des entnommenen Fluids ungleich Null für eine Dauer zwischen 0,1 Sekunde bis 30 Sekunden und vorzugsweise zwischen 0,5 Sekunden und 5 Sekunden repräsentativ ist, zu steuern.

4. Flasche nach einem der Ansprüche 1 bis 3, **dadurch gekennzeichnet, dass** das Datenspeicher- und Datenverarbeitungserfassungsorgan (7) konfiguriert ist, um eine Füllung der Flasche (2) durch das Empfangen eines externen Signals zur Füllung und/oder durch das Empfangen eines Signals zur Erhöhung des in der Flasche gemessenen Drucks (P) oberhalb eines bestimmten Füllschwellenwerts zu detektieren.

5. Flasche nach einem der Ansprüche 1 bis 4, **dadurch gekennzeichnet, dass** das Datenspeicher- und Datenverarbeitungserfassungsorgan (7) konfiguriert ist, um die Menge des entnommenen Fluids nach dem Empfangen eines Signals vom Positionssensor (9) des Steuerorgans (5) zu berechnen, das für die Auswahl eines Durchsatzes und/oder des Drucks des entnommenen Fluids ungleich Null repräsentativ ist, und um das Entfernen oder Ändern der Informationsanzeige in Bezug auf einen vorbestimmten festen Fluidgehalt in der Flasche (2) auf der Anzeigevorrichtung (8) zu steuern, wenn diese entnommene Menge ein Volumen von zwischen fünf und hundert Litern Fluid und vorzugsweise zwischen zehn und fünfzig Litern Fluid überschreitet.

6. Flasche nach einem der Ansprüche 1 bis 5, **dadurch gekennzeichnet, dass** das Datenspeicher- und Datenverarbeitungserfassungsorgan (7) konfiguriert ist, um aus diesem gemessenen Drucksignal P die Druck- oder Mengenvariation des Fluids in der Flasche (2) zu berechnen und als Reaktion die Informationsanzeige in Bezug auf einen vorbestimmten festen Fluidgehalt in der Flasche (2) auf der Anzeigevorrichtung (8) zu löschen oder zu ändern, wenn die berechnete Menge des entnommenen Fluids einen bestimmten Anfangsentnahmeschwellenwert überschreitet.

7. Flasche nach Anspruch 6, **dadurch gekennzeichnet, dass** der Anfangsentnahmeschwellenwert zwischen 0,5 % und 10 % der Anfangsgasmenge liegt.

8. Flasche nach einem der Ansprüche 1 bis 7, **dadurch gekennzeichnet, dass** das Datenspeicher- und Datenverarbeitungserfassungsorgan (7) konfiguriert ist, um sowohl das gemessene Drucksignal (P) des Drucksensors (10) als auch das vom Positionssensor (9) gelieferte Durchsatz- und/oder Drucksignal (D) zu empfangen und aus diesen beiden Signalen eine Autonomie-, Druck- oder Restmengeninformation des Fluids zu berechnen.

9. Flasche nach Anspruch 8, **dadurch gekennzeichnet, dass** die Restfluidautonomie durch Berechnen des theoretischen zeitlichen Druckabfalls oder der Gasmenge, die durch den vom Organ (4) zum Regulieren auferlegten und/oder vom Drucksensor (10) gemessenen Durchsatz und/oder Druck der Entnahme (D) erzeugt wird, aus dem Anfangsmessdruck bestimmt wird.

10. Flasche nach einem der Ansprüche 1 bis 9, **dadurch gekennzeichnet, dass** der Autonomiewert oder der Theoriegehalt des in der Flasche verbleibenden Fluids in der verbleibenden Zeit (jeweils in Restmenge) ausgedrückt wird, indem der vom Drucksensor (10) gemessene Anfangsdruck (oder beziehungsweise eine aktuelle Gasmenge) durch die vom Organ (4) zum Regulieren auferlegte theoretische Druckvariation (beziehungsweise die vom Organ (4) zum Regulieren auferlegte Mengenvariation) geteilt wird nach einer Formel vom Typ: Restzeit=Anfangsdruck/auferlegte Druckänderung (oder beziehungsweise: Restzeit=Restmenge/auferlegte Mengenvariation), wobei die Menge über die Gleichung des idealen Gases (PV=nRT) oder des realen Gases (PV=nZRT) (Einheiten SX) geschätzt wird, mit P als gemessenem Druck, V als bekanntem Volumen der Flasche, n als Menge, R als Konstante des idealen Gases und T als gemessene oder angenäherte Temperatur an der gemessenen Umgebungstemperatur, Z als aus der Tabelle bekannten oder berechneten Kompressibilitätsfaktor.

## Claims

1. Cylinder of pressurised fluid provided with a tap housing a first bleed-off circuit (3) comprising a first upstream end (13) communicating with the storage volume of a cylinder of pressurised fluid and a second downstream end (23) configured to be connected to a member using the bleed-off gas, the first bleed-off circuit (3) comprising a flow and/or pressure regulation member (4) for the bleed-off fluid between the upstream (13) and downstream (23) ends, the tap (1) comprising a member (5) for manual control of the regulation member (4), the control member (5) being mounted movable with respect to the body of the tap (1) and cooperating with the regulation member (4) to control the flow and/or the pressure of the fluid allowed to flow from the upstream end (13) to the downstream end (23) according to the position of the control member (5) with respect to the body (5), the tap (1) comprising an electronic device (6) indicating the data relating to the content of fluid in a cylinder connected to the tap (1), the electronic indicator device (6) comprising a member (7) for the acquisition, storage and processing of data and at least one data display (8) connected to the member (7) for the acquisition, storage and processing of the data, the tap (1) comprising a sensor (9) for the position of the member (5) for manual control of the regulation member (4), the position sensor (9) being connected to the member (7) for the acquisition, storage and processing of data to transmit to the latter a signal representing the flow and/or pressure of the fluid imposed by the regulation member (4), the member (7) for the acquisition, storage and processing of data being configured to demand the displaying on the display (8), after filling of the cylinder (2) and before a first bleed-off of the fluid, of fixed information relating to a determined fixed content of fluid in the cylinder (2), as long as the position sensor (9) has not transmitted a signal representing a non-nil flow and/or pressure of the bleed-off fluid for a determined period and/or has not transmitted a signal representing a determined quantity of bleed-off fluid, the manual demand member (5) of the regulation member (4) being movable into a so-called "closed" position corresponding to a closure of the first bleed-off circuit (3), i.e. that the flow of fluid allowed to pass from the upstream end (13) to the downstream end (23) is nil, **characterised in that** the tap comprises a pressure sensor (10) configured to measure the pressure within the storage volume of the cylinder (2), the sensor being connected to the member (7) for the acquisition, storage and processing of the data to transmit to the latter, in a wired and/or wireless manner, a signal representing the measured fluid pressure, and **in that** the tap (1) comprises a second bleed-off circuit (11) bypassing the flow and/or pressure regulation member (4) of the first bleed-off circuit (3), and **in that**, when the manual control member (5) is in its closed position and the variation of the signal representing the pressure of the fluid within the cylinder is greater that a given variation threshold, the member (7) for the acquisition, storage and processing of data is configured to detect a fluid bleed-off through the second bleed-off circuit (11) or a fluid leakage and, as necessary, to demand the display on the display (8) of information relating to a bleed-off through the second bleed-off circuit (11) and/or relating to a leakage.

2. Cylinder according to claim 1, **characterised in that**, when the variation of the signal reflecting the pressure of the fluid within the cylinder is greater than the determined variation threshold, for example equal to 25 mbar per minute, the member (7) for the acquisition and processing of data is configured to detect at least one characteristic of the rate of variation of the pressure of the fluid in the cylinder owing to the bleed-off through the second bleed-off circuit (11), the at least one characteristic comprises for example: a periodic character of the variation of pressure or quantity, the frequency of the variation of pressure or quantity, or the level of variation of pressure or quantity, and **in that**, if this pressure signal does not correspond to a ventilation signal, i.e. the pressure variation is decreasing and continuous, the member (7) for the acquisition, storage and processing of the data is configured to determine whether it is a leakage or an improper use of the gas and to signal this by demanding information relating to a bleed-off through the second bleed-off circuit (11) and/or relating to a leakage through a warning signal.

3. Cylinder according to one of claims 1 or 2, **characterised in that** said information relating to a determined fixed content of fluid in the cylinder comprising at least one among the following: an alphanumeric signal, a picture symbol, a fixed pressure value, a fixed fluid quantity value, the term "plein" or "full", the symbol "100%", and **in that** the member (7) for the acquisition, storage and processing of data is configured to calculate the quantity of fluid bled off upon receiving a signal from the position sensor (9) of the control member (5) reflecting the selection of a non-nil flow and/or the pressure of fluid bled off and to demand the withdrawal or modification of the display on the display (8) of the information relating to a determined fixed content of fluid in the cylinder (2) when this calculated remaining quantity or remaining pressure is equal to a value ranging from 75% to 99%, and preferably ranging from 90% to 98% of the quantity (respectively of the pressure) of the cylinder contained in the cylinder (2) after filling and/or to demand the withdrawal or the modification of the displaying on the display (8) of the information relating to a determined fixed content of fluid in the cylinder (2) in response to the receipt of a signal from the position sensor (9) of the control member (5) reflecting the selection of a non-nil flow and/or the pressure of the fluid bled off for a period ranging from 0.1 seconds to 30 seconds, and preferably ranging from 0.5 seconds to 5 seconds.

4. Cylinder according to one of claims 1 to 3, **characterised in that** the member (7) for the acquisition, storage and processing of data is configured to detect a filling of the cylinder (2) through the receipt of an external filling signal and/or through the receipt of a signal reflecting an increase of the pressure (P) measured in the cylinder beyond a determined filling threshold.

5. Cylinder according to one of claims 1 to 4, **characterised in that** the member (7) for the acquisition, storage and processing of data is configured to calculate the quantity of fluid bled off upon receiving a signal from the position sensor (9) of the demand member (5) representing the selection of a non-nil flow and/or pressure of the fluid bled off and to demand the withdrawal or the modification of the displaying on the display (8) of the information relating to a determined fixed content of fluid in the cylinder (2) when this quantity bled off exceeds a volume ranging from five to 100 litres of fluid, and preferably ranging from 10 to 50 litres of fluid.

6. Cylinder according to one of claims 1 to 5, **characterised in that** the member (7) for the acquisition, storage and processing of data is configured to calculate the variation of pressure or quantity of fluid in the cylinder (2) based on this measured pressure signal P and, in response, to remove or modify the displaying on the display (8) of the information relating to a determined fixed content of fluid in the cylinder (2) when the calculated quantity of fluid bled off exceeds a determined initial bleed-off threshold.

7. Cylinder according to claim 6, **characterised in that** the initial bleed-off threshold ranges from 0.5% to 10% of the initial quantity of gas.

8. Cylinder according to one of claims 1 to 7, **characterised in that** the member (7) for the acquisition, storage and processing of data is configured to receive both the measured pressure signal (P) from the pressure sensor (10) and the flow and/or pressure signal (D) provided by the position sensor (9) and to calculate an information relating to the remaining time, pressure or quantity of remaining fluid based on these two signals.

9. Cylinder according to claim 8, **characterised in that** the remaining time for the fluid is determined by calculating, based on the measured initial pressure, the theoretical decrease through time of pressure or quantity of gas generated by the bleed-off flow and/or pressure (D) imposed by the regulation member (4) and/or measured by the pressure sensor (10).

10. Cylinder according to one of claims 1 to 9, **characterised in that** the remaining time or theoretical content of remaining fluid in the cylinder is expressed as time remaining (respectively as quantity remaining) by dividing the initial pressure measured by the pressure sensor (10) (or respectively, a current quantity of gas) by the theoretical pressure variation imposed by the regulation member (4) (respectively the quantity variation imposed by the regulation member (4)) according to a formula of the following type: Time remaining = initial pressure/imposed variation of pressure (or respectively: Time remaining = remaining quantity/imposed variation of quantity), the quantity being assessed through the ideal gas equation (PV = nRT) or real gas equation (PV = nZRT) (S.I. units), with P being the measured pressure, V being the known volume of the cylinder, n being the quantity, R being the constant of the ideal gases and T the temperature measured or approximated to the measured ambient temperature, Z being the compressibility factor determined by a chart or calculated.
